# EUROPEAN PATENT SPECIFICATION

(11) **EP 0 459 051 B1**
(45) Date of publication and mention of the grant of the patent: **25.01.1995**
(21) Application number: 90306036.6
(22) Date of filing: 01.06.1990
(51) Int. Cl.: B24B 27/033, B23Q 7/16

(54) **Surface treatment of metal billets**
Flächenbehandlung von metallischen Knüppeln
Traitement de surface de billettes métalliques

(43) Date of publication of application: 04.12.1991
(73) Proprietor: SOMAFER S.A., F-57100 Thionville (FR)
(72) Inventor: Detronde, Michel, Maidières, F-54700 Pont A Mousson (FR); Marcuzzi, Adolfo, 57 Rombas (FR)
(74) Representative: Shaw, Laurence

(56) References cited:
- WO-A-82/02506
- DE-A- 2 405 954
- DE-A- 2 725 284
- DE-A- 3 502 631
- FR-A- 2 125 956
- FR-A- 2 473 385

## Description

The invention relates to the surface treatment of metal billets and the like and in particular the removal of surface and subsurface defects by grinding.

Billets can have surface defects such as cracks or inclusions which must be removed. It is known to treat the surface defects by first inspecting the billets, marking the location of the defects and then removing the defects by grinding. The known methods of grinding either involve moving the billets one by one underneath a motorised grinding wheel at a feed location or laying a plurality of the billets in side-by-side and end-to-end relation on a work table and then grinding the defects using a low powered hand held grinding tool. The work is dirty and dangerous. Both methods are time consuming, and there is a need for a method of treating billets which is reliable, efficient and involves less danger for the operator.

FR-A-2125956 teaches a method of removing a surface defect on an elongate metal billet by grinding away the defect using a grinding wheel mounted in a framework, means connected to the framework being adapted to move the grinding wheel in three mutually orthogonal directions, in which the grinding wheel is advanced to overlie the defect, the wheel is lowered and the defect ground away.

The present invention provides an improved method of treating the billets.

Accordingly in one aspect the invention provides a method of removing a surface defect on an elongate metal billet by grinding away the defect using a grinding wheel mounted in a support framework, means connectable to the framework being adapted to move the grinding wheel in three mutually orthogonal directions, actuating the means so as to advance the grinding wheel until it overlies the defect, lowering the wheel and grinding away the defect, characterised in that the billets are of rectangular cross section and are arranged in side-by-side relation on a table, which table includes longitudinally extending recesses transversely spaced apart across the table and shaped to hold a longitudinal corner portion of a billet, the billets are moved across the table so as to cause a longitudinal corner portion of the billet to be received in a recess, thereby rotating the billet through substantially 45° so as to present the opposing longitudinal corner portion uppermost to the grinding wheel and moving the billet across the table to progressively rotate the billet and expose successive faces uppermost.

The grinding wheel and the support can be controlled from a remote location: eg from behind a screen, so the work is less hazardous for the operator. Preferably the billets are laid in both side-by-side and end-to-end relation, as a horizontal or array of billets. In such a case, the grinding wheel can be quickly moved from one billet to another and the defects are efficiently treated.

In another aspect the invention provides an apparatus for use in removing surface defects from a plurality of billets. The apparatus comprises a support framework having a grinding wheel mounted thereon, the support framework including means for moving the grinding wheel in three directions arranged mutually orthogonally, actuating means so as to advance the grinding wheel until it overlies a defect and means to raise and lower the grinding wheel characterised in that the apparatus includes a table on which the billets of rectangular cross-section can be arranged in side-by-side relation, the table having longitudinally-extending recesses transversely spaced apart across the table, the recesses being of a shape to hold a longitudinal corner of a billet and means to push the billets accross the table whereby their corners are received in and rotated through 45° by successive recesses.

The billets are preferably arranged relative to the apparatus so that the first carriage travels in a direction parallel to the longitudinal axis of the arranged billets.

The grinding wheel is preferably suspended from the support by a lever arm pivotally mounted about a horizontal axis, whereby the wheel is adapted for movement in a vertical direction. The lever arm may also be pivotally mounted on the support about a vertical axis.

Longitudinal surface defects are often present on the corner portions of the billets and it is difficult with the known methods to reliably or efficiently treat those defects. It is known to turn the billets manually using a lever both to expose the corners and to present the other faces for treatment, but this can be awkward. The invention overcomes this difficulty.

In another aspect of the invention there is provided a method of treating surface defects on different surfaces of an elongate metal billet of rectangular cross section, the method comprising laying the billet on a table, to present a face for treatment of its surface defects, the table including a plurality of transversely spaced apart longitudinally extending substantially v-shaped recesses shaped to receive a longitudinal corner portion of the billet, moving the billet in steps across the table so that successive corner portions are received in successive recesses, and lowering surface treatment apparatus towards each successive side face presented for treatment of the surface defects thereby to remove the defects on successive faces.

In order that the invention may be well understood, various embodiments thereof will now be described with reference to the accompanying drawings, in which:
Figure 1 is a schematic exploded perspective view of one embodiment of apparatus for use in the invention;
Figure 2 is an end elevation of an embodiment of the invention;
Figure 3 is a side view of the apparatus of Figure 2;
Figure 4 is a fragmentary partial top plan view of the apparatus of Figures 2 and 3;

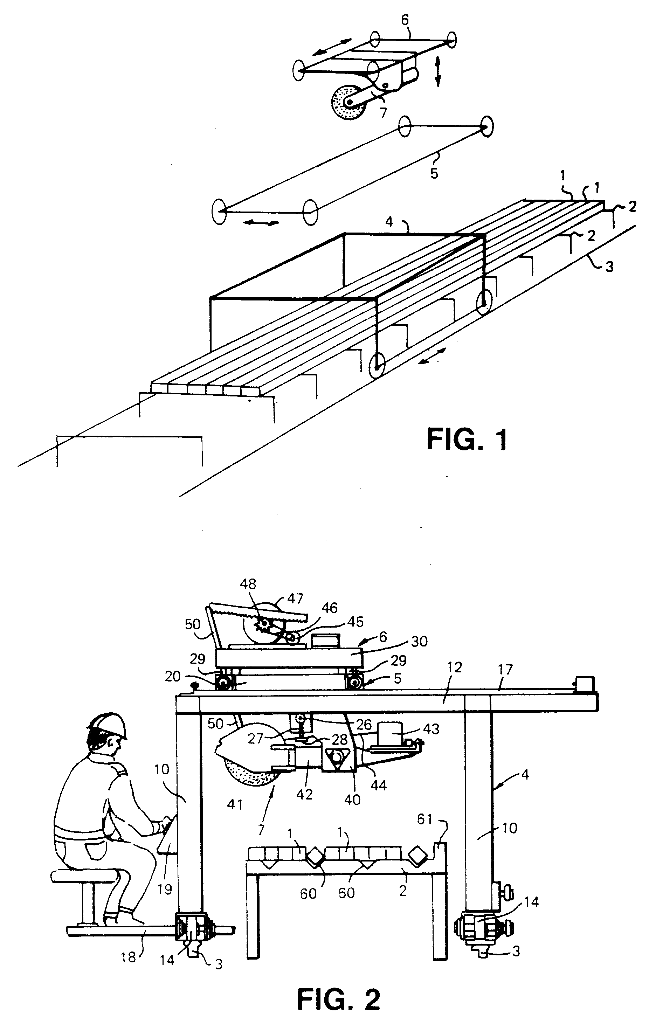

Figure 1 shows schematically groups of elongate metal billets 1 which are arranged in side-by-side relation upon a table 2. Each billet typically of steel may measure between, say, 1 and 30 m long and be of square or rectangular cross section having a side dimension of between about 5 and about 13 cm. The groups are arranged in end to end relation.

Apparatus for use in treating the billets comprises rails 3 extending on each side of the table 2 parallel to the longitudinal axis of the arranged billets. A first carriage 4 is mounted for movement along the rails and comprises a box-like frame made from elongate frame members joined together, e.g. welded. A second carriage 5 is mounted in the upper part of the first carriage 4 and is arranged to reciprocate along a path at right angles to that travelled by the first carriage 4. A third carriage 6 is mounted upon the second carriage 5 and is arranged to reciprocate along a shorter path generally parallel to that of the first carriage 4. A grinding wheel assembly 7 is suspended from the third carriage and is movable vertically between a raised and a lowered condition, as will all be described in greater detail.

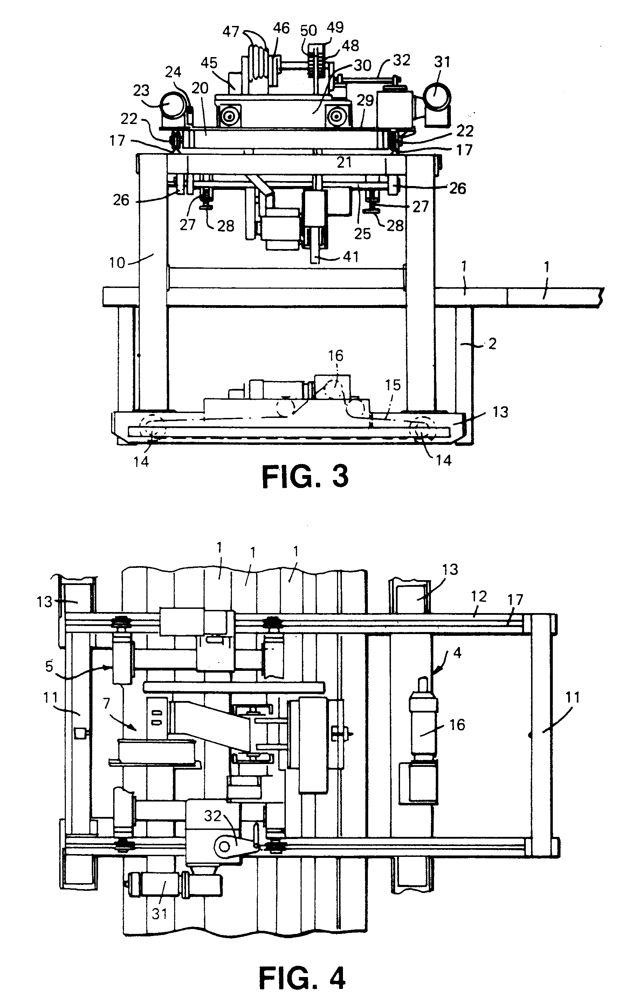

One embodiment of the apparatus is shown in greater detail in Figures 2 to 4. The first carriage 4 comprises four uprights 10 which are joined at their top by two side frame members 11 and two bridging or cross members 12. A wheel housing 13 is present at the foot of the uprights 10 at each side. Two wheels 14 are present in each housing, each pair of wheels being driven by a drive belt 15 connected to a motor 16 to cause the carriage 4 to travel along the rails 3. The second carriage 4 comprises a generally rectangular planar framework of frame members 21 joined together at the corners. The second carriage 5 reciprocates along rails 17 extending along the uppermost surface of the bridging members 12 of the first carriage 4. Wheels 22 are present below the member 21 to engage the rail 17.

An electric motor 23 connected by a drive belt 24 to an axle 25 present underneath the topmost frame members 12,13 of the first carriage 4 to power movement of the second carriage. A wheel 26 having a resilient tyre, e.g. rubber is present at each end of the axle 25. A screw 27 having a handle 28 is present to urge the wheel 26 into engagement with the underside of the bridging member 12 of the first carriage 4.

The third carriage 6 reciprocates along rails 29 extending along the uppermost surface of those frame members 21 of the second carriage which extend in a direction generally parallel to the side frame members 12 of the first carriage 4. The third carriage comprises a rectangular planar framework of frame members 30 joined together. Wheels (hidden from view in the drawings) are present to engage the rails 29. The drive means for the third carriage comprises a stepper motor 31 mounted on the second carriage connected by a rotary crank assembly 32, rotation of the crank by the motor causing the third carriage to reciprocate across the second carriage.

The grinding wheel assembly 7 is suspended from the third carriage and comprises framework 40 hanging beneath the level of the topmost members of the first carriage. A grinding wheel 41 is mounted at one end of a balanced lever arm 42 which is pivotally mounted about a horizontal axis. A motor 43 and drive belt 44 are present on the arm 42 to rotate the grinding wheel 41. The motor is preferably of low to medium power, e.g. about 5.5 kw. An electric motor 45 is mounted on the top of the carriage 6 and is connected by a drive belt 46 via an electromechanical clutch assembly 47 to a pinion 48. The pinion 48 engages an elongate rack 49 which is inclined upwardly at a shallow angle. A pivotally mounted rod 50 extends between the elevated end of the rack and the lever arm 42, whereby the motor 45 provides the power for pivotal movement of the arm 42.

A platform 18 extends to one side of one of the bottom side frame members upon which, as shown, an operator is sitting and controlling the grinding wheel assembly 7 from a control box 19. A protective screen is preferably present through which he can monitor the process.

In use, the billets are firstly inspected for defects and marked, e.g. with a stripe of paint. They may be inspected visually or e.g. using x-rays. The billets are arranged on the table 2 and the first carriage 4 is advanced until the wheel 41 is generally above but spaced across the table 2 from the start of the first defect to be treated. The second carriage 5 is then moved across the table until the wheel symmetrically overlies the leading edge of the defect. The motor 45 is then actuated to lower the wheel 41 onto the surface of the billet 1. This action transfers power through the clutch 47 to the pinion 48 which moves the rack 49 in a downward direction, thereby lowering the wheel 41, which travels through an arcuate path. The pressure applied by the wheel 41 onto the surface of the billet can be adjusted by control or "slipping" of the clutch 47. The wheel is rotated by switching on the motor 43. Short longitudinally extending defects can be ground away by moving the third carriage along its rails 29. Because the third carriage 6 is so much smaller than the first carriage 4, it is much more accurately controlled. The resilient tyres 26 and the clamping mechanism 27 between the second and first carriages reduce any problems caused by vibration and ensure the defect is accurately ground away.

The billets can be turned, both to treat defects on side surfaces which are hidden, and to treat defects on the corners of the billets. The table 2 includes a plurality of transversely spaced apart v-shaped recesses 60 in the uppermost surface. The recesses are shaped to hold two adjacent side faces of a billet, so that the opposing longitudinal corner portion faces uppermost. A vertical wall 61 is present at one side of the table 2. In use, by pushing the billets from one side across the table, each billet can be progressively rotated to expose successive side faces so that defects thereon can be treated. Surface defects which are present on the longitudinal corner portions can also be treated when the billet is supported in a recess 60. Four recesses 60 are shown but the number is not critical.

## Claims

1. A method of removing a surface defect on an elongate metal billet (1) by grinding away the defect using a grinding wheel (41) mounted in a support framework (3,4,5,6), means (16,23,31,45) connectable to the framework being adapted to move the grinding wheel (41) in three mutually orthogonal directions, actuating the means (16,23,31,45) so as to advance the grinding wheel (41) until it overlies the defect, lowering the wheel (41) and grinding away the defect characterised in that billets (1) of rectangular cross section are arranged in side-by-side relation on a table (2), which table includes longitudinally extending recesses (60) transversely spaced apart across the table (2) and shaped to hold a longitudinal corner portion of a billet, the billets (1) are moved across the table (2) so as to cause a longitudinal corner portion of a billet to be received in a recess (60), thereby rotating a billet through substantially 45° so as to present the opposing longitudinal corner portion upper most to the grinding wheel (41) and moving the billet (1) across the table to progressively rotate the billet and expose successive faces uppermost.

2. A method according to Claim 1 characterised by advancing a first carriage (4) of the support framework in a direction generally parallel to the longitudinal axis of the arranged billets until the grinding wheel (41) is spaced to one side of the defect, a second carriage (5) carrying the grinding wheel (41) being mounted upon the first carriage (4), and advancing the second carriage (5) sideways across the billets (1) until the grinding wheel overlies the defect.

3. A method according to Claim 1 or 2 characterised in that the billets (1) are arranged in a horizontal array on a table (2).

4. Apparatus for removing surface defects from a plurality of metal billets (1), the apparatus comprising a support framework (3,4,5,6) having a grinding wheel (41) mounted thereon, the support framework including means (16,23,31,45) for moving the grinding wheel in three directions arranged mutually orthogonally, actuating means (16,23,41,45) so as to advance the grinding wheel (41) until it overlies a defect and means to raise and lower the grinding wheel (41) characterised in that the apparatus includes a table (2) on which the billets (1) of rectangular cross-section can be arranged in side-by-side relation, the table having longitudinally-extending recesses (60) transversely spaced apart across the table (2), the recesses (60) being of a shape to hold a longitudinal corner of a billet (1) and means to push the billets (1) across the table whereby their corners are received in and rotated through 45° by successive recesses.

5. Apparatus according to Claim 4, characterised in that the support framework comprises a first carriage (4) movable in a first direction relative to the arranged billets, a second carriage (5) mounted upon the first carriage (4) and movable in a direction at right angles to the first direction, and a third carriage (6) mounted upon the second carriage (5) and movable in a direction generally parallel to that of the first carriage (4), but to a more limited length of travel, the grinding wheel (41) being suspended from the third carriage (6); means (16,23,31) being present to move the respective carriages

6. Apparatus according to Claim 5 characterised in that the first carriage (4) is arranged for travel on rails (3) spaced apart on either side of an elongate table (2).

7. Apparatus according to Claim 5 or 6 characterised in that means (26,27,28) connecting the second carriage (5) to the first carriage (4) are present to suppress vibration.

8. Apparatus according to Claim 7 characterised in that the first carriage comprises two uppermost spaced apart side frame members (11) joined by two bridging members (12) and the second carriage (5) is arranged to be driven along the upper most surface of the bridging members (12), the means to move the second carriage comprising at least one driven wheel (26) engageable with the underside of each bridging member (12), means (27,28) being present to urge the wheel into engagement with the bridging member, the wheel (26) having a tyre formed from a resilient material to suppress vibration.

9. Apparatus according to any of Claims 5 to 8 characterised in that the grinding wheel (41) is disposed on a lever arm (42) movable between a lowered condition and a raised condition.

10. Apparatus according to Claim 9 characterised in that a motor (45) mounted upon the third carriage (6) is present to raise and lower the lever arm (42) and thereby the grinding wheel (41), and adjustable clutch means (47) are present between the motor (45) and the arm (42), whereby the pressure applied by the grinding wheel (41) upon the surface of the billet (1) may be adjusted by control of the clutch means.

11. Apparatus according to any of Claims 5 to 10, characterised by means (129) arranged to pivot the grinding wheel about a vertical axis.

12. A method of treating surface defects on different surfaces of an elongate metal billet of rectangular cross section, the method comprising laying the billet (1) on a table (2), the table (2) to present a face for treatment of its surface defects and lowering surface treatment apparatus (41) towards the face, characterised in that the table (2) includes a plurality of transversely spaced apart longitudinally extending substantially v-shaped recesses (60) shaped to receive a longitudinal corner portion of the billet, moving the billet in steps across the table so that successive corner portions are received in successive recesses, whereby each successive side face may be presented for treatment of the surface defects thereby to remove the defects on successive faces.

## Patentansprüche

1. Verfahren zum Entfernen eines Oberflächendefektes auf einem länglichen Metallblock (1) durch Abschleifen des Defektes mit Hilfe einer in einem Stützgestell (3, 4, 5, 6) montierten Schleifscheibe (41), wobei mit dem Gestell verbundene Mittel (16, 23, 31, 45) die Schleifscheibe (41) in drei zueinander orthogonalen Richtungen bewegen, Betätigen der Mittel (16, 23, 31, 45), so daß die Schleifscheibe (41) zugestellt wird, bis sie sich über dem Defekt befindet, Absenken der Scheibe (41) und Abschleifen des Defektes, dadurch gekennzeichnet, daß die Blöcke (1) einen rechteckigen Querschnitt aufweisen und nebeneinander auf einem Tisch (2) angeordnet werden, wobei der Tisch in Längsrichtung verlaufende und in Querrichtung über den Tisch (2) beabstandete Ausnehmungen (60) aufweist, die so geformt sind, daß sie einen längsseitigen Eckenabschnitt eines Blockes festhalten, die Blöcke (1) so über den Tisch (2) bewegt werden, daß ein längsseitiger Eckenabschnitt eines Blockes von einer Ausnehmung (60) aufgenommen wird, wodurch der Block um etwa 45° gedreht wird, so daß der gegenüberliegende längsseitige Eckenabschnitt nach oben der Schleifscheibe (41) dargeboten wird, und Bewegen des Blockes (1) über den Tisch, so daß er sich nacheinander dreht und seine Flächen nacheinander nach oben zu liegen kommen.

2. Verfahren nach Anspruch 1, gekennzeichnet durch das Verfahren eines ersten Schlittens (4) des Traggestelles in einer Richtung allgemein parallel zur Längsachse der angeordneten Blöcke, bis die Schleifscheibe (41) auf einer Seite einen Abstand von dem Defekt aufweist, wobei ein zweiter Schlitten (5) die Schleifscheibe (41) trägt, die auf dem ersten Schlitten (4) montiert ist, und Verfahren des zweiten Schlittens (5) seitwärts über die Blöcke (1), bis sich die Schleifscheibe über dem Defekt befindet.

3. Verfahren nach Anspruch 1 oder 2, dadurch gekennzeichnet, daß die Blöcke (1) in einer horizontalen Fläche auf einem Tisch (2) angeordnet sind.

4. Vorrichtung zum Entfernen von Oberflächendefekten von einer Mehrzahl von Metallblöcken (1), umfassend ein Traggestell (3, 4, 5, 6) mit einer darauf montierten Schleifscheibe (41), wobei das Traggestell Mittel (16, 23, 31, 45) zum Bewegen der Schleifscheibe in drei zueinander orthogonalen Richtungen, Betätigungsmittel (16, 23, 41, 45) zum Zustellen der Schleifscheibe (41), bis sie sich über einem Defekt befindet, sowie Mittel zum Heben und Senken der Schleifscheibe (41) aufweist, dadurch gekennzeichnet, daß die Vorrichtung einen Tisch (2) umfaßt, auf dem die Blöcke (1) mit rechteckigem Querschnitt nebeneinander angeordnet werden können, wobei der Tisch in Längsrichtung verlaufende und in Querrichtung über den Tisch (2) beabstandete Ausnehmungen (60) aufweist, wobei die Ausnehmungen (60) so ausgestaltet sind, daß sie eine längsseitige Ecke eines Blockes (1) sowie Mittel zum Schieben der Blöcke (1) über den Tisch halten, so daß deren Ecken von nachfolgenden Ausnehmungen aufgenommen und um 45° gedreht werden.

5. Vorrichtung nach Anspruch 4, dadurch gekennzeichnet, daß das Traggestell einen ersten Schlitten (4) aufweist, der in einer ersten Richtung relativ zu den angeordneten Blöcken beweglich ist, einen zweiten Schlitten (5), der auf dem ersten Schlitten (4) montiert ist und in einer Richtung im rechten Winkel zu der ersten Richtung beweglich ist, und einen dritten Schlitten (6), der auf dem zweiten Schlitten (5) montiert ist und in einer Richtung allgemein parallel zu der des ersten Schlittens (4) beweglich ist, aber auf einem kürzeren Weg, wobei die Schleifscheibe (41) an dem dritten Schlitten (6) hängt, wobei Mittel (16, 23, 31) zum Verfahren der jeweiligen Schlitten vorhanden sind.

6. Vorrichtung nach Anspruch 5, dadurch gekennzeichnet, daß der erste Schlitten (4) zum Fahren auf Schienen (3) angeordnet ist, die auf beiden Seiten eines länglichen Tisches (2) voneinander beabstandet sind.

7. Vorrichtung nach Anspruch 5 oder 6, dadurch gekennzeichnet, daß den zweiten Schlitten (5) und den ersten Schlitten (4) miteinander verbindende Mittel (26, 27, 28) zum Unterdrücken von Vibrationen vorhanden sind.

8. Vorrichtung nach Anspruch 7, dadurch gekennzeichnet, daß der erste Schlitten zwei obere, voneinander beabstandete Seitenrahmenelemente (11) aufweist, die durch zwei Überbrückungselemente (12) verbunden sind, und der zweite Schlitten (5) so angeordnet ist, daß er über die Oberseite der Überbrückungselemente (12) bewegt wird, wobei das Mittel zum Bewegen des zweiten Schlittens wenigstens ein angetriebenes Rad (26) aufweist, das in die Unterseite jedes Überbrückungselementes (12) eingreift, wobei Mittel (27, 28) vorhanden sind, um das Rad in den Eingriff mit dem Überbrückungselement zu drücken, wobei das Rad (26) einen Reifen aufweist, der zum Unterdrücken von Vibrationen aus einem elastischen Material gebildet ist.

9. Vorrichtung nach einem der Ansprüche 5 bis 8, dadurch gekennzeichnet, daß die Schleifscheibe (41) auf einem Hebelarm (42) angeordnet ist, der zwischen einer abgesenkten Position und einer angehobenen Position beweglich ist.

10. Vorrichtung nach Anspruch 9, dadurch gekennzeichnet, daß ein auf dem dritten Schlitten (6) montierter Motor (45) vorhanden ist, um den Hebelarm (42) und somit die Schleifscheibe (41) zu heben und zu senken und daß eine verstellbare Kupplung (47) zwischen dem Motor (45) und dem Arm (42) vorhanden ist, so daß der durch die Schleifscheibe (41) auf die Oberfläche des Blocks (1) aufgebrachte Druck durch Steuern der Kupplung geregelt werden kann.

11. Vorrichtung nach einem der Ansprüche 5 bis 10, gekennzeichnet durch Mittel (129), die zum Schwenken der Schleifscheibe um eine senkrechte Achse angeordnet sind.

12. Verfahren zur Behandlung von Oberflächendefekten auf verschiedenen Flächen eines länglichen Metallblockes mit rechteckigem Querschnitt, das die folgenden Schritte umfaßt: Legen des Blockes (1) auf einen Tisch (2), der eine Fläche zur Behandlung seiner Oberflächendefekte darbietet, und Absenken der Oberflächenbehandlungsvorrichtung (41) zu der Fläche, dadurch gekennzeichnet, daß der Tisch (2) eine Mehrzahl von in Querrichtung beabstandeter und in Längsrichtung verlaufender, im wesentlichen V-förmiger Ausnehmungen (60) aufweist, die so ausgestaltet sind, daß sie einen längsseitigen Eckenabschnitt des Blockes aufnehmen, Bewegen des Blockes schrittweise über den Tisch, so daß aufeinanderfolgende Eckenabschnitte in aufeinanderfolgenden Ausnehmungen aufgenommen werden, so daß jede aufeinanderfolgende Seitenfläche zur Behandlung der Oberflächendefekte dargeboten werden können, um so die Defekte auf aufeinanderfolgenden Flächen zu entfernen.

## Revendications

1. Méthode d'élimination des défauts de la surface d'un lingot de métal allongé (1) par polissage des défauts, à l'aide d'une meule (41) montée sur une base de support (3,4,5,6) et dont les moyens (16,23,31,45) reliés à la base sont fixés de manière à amener la meule (41) à se déplacer dans trois directions réciproquement orthogonales, les moyens (16,23,31,45) étant mis en marche de façon à faire avancer la meule (41) jusqu'à ce qu'elle se trouve au-dessus du défaut, à abaisser cette meule (41), et à polir les défauts, caractérisée en ce que les lingots (1) de coupe rectangulaire sont disposés côte à côte sur un établi (2), et en ce que ledit établi inclut des renfoncements longitudinaux (60) qui se prolongent transversalement et sont répartis sur l'établi (2) et conçus de manière à recevoir la partie longitudinale angulaire d'un lingot ; les lingots (1) sont déplacés sur la largeur de l'établi (2) afin que la partie longitudinale angulaire de chaque lingot puisse retomber dans un des renfoncements (60) et soit amenée à pivoter sur environ 45° de façon à présenter la partie longitudinale opposée vers le haut, face à la meule (41) et à faire tourner le lingot (1) sur la largeur de l'établi en lui appliquant un mouvement progressif de rotation et en exposant successivement chacune des faces vers le haut.

2. Méthode qui, selon la Revendication 1 est caractérisée en ce qu'un premier chariot (4) de la base de support est propulsé dans une direction habituellement parallèle à l'axe longitudinal dans lequel les lingots sont disposés jusqu'à ce que la meule (41) se trouve d'un côté du défaut, un deuxième chariot (5) transportant la meule (41) étant monté sur le premier chariot (4) et faisant avancer le deuxième chariot (5) latéralement au-dessus des lingots (1) jusqu'à ce que la meule se trouve au-dessus du défaut.

3. Méthode qui, selon les Revendications 1 ou 2, est caractérisée en ce que les lingots (1) sont disposés horizontalement sur l'établi (2).

4. Appareil servant à éliminer les défauts de surface d'une série de lingots de métal (1), l'appareil comprenant une base de support (3,4,5,6) sur laquelle est montée une meule (41), la base de support étant munie de moyens (16,23,31,45) permettant de déplacer la meule dans trois directions réciproquement orthogonales, ces moyens (16,23,31,45) permettant de faire avancer la meule (41) jusqu'au-dessus d'un défaut, et des moyens permettant d'élever et d'abaisser la meule (41), appareil caractérisé en ce qu'il inclut un établi (2) sur lequel les lingots (1) de coupe rectangulaire peuvent être disposés côte à côte et bout à bout, l'établi étant muni de renfoncements longitudinaux (60) placés transversalement sur l'établi (2), les renfoncements (60) étant conçus de manière à recevoir l'arête longitudinale d'un lingot (1), et en ce que cet appareil est muni de moyens permettant de pousser les lingots (1) sur l'établi de façon à ce que leur arête s'adapte et pivote selon un angle de 45° dans les renfoncements successifs.

5. Appareil qui, selon la Revendication 4, est caractérisé en ce que la base de support comprend un premier chariot (4) qui se déplace dans une première direction en rapport avec les lingots pré-disposés, un deuxième chariot (5) monté sur le premier chariot (4) et qui se déplace à angle droit par rapport à la première direction, et un troisième chariot (6) monté sur le deuxième chariot (5) qui se déplace dans une direction généralement parallèle à celle du premier chariot (4) mais sur une distance réduite, la meule (41) étant suspendue du troisième chariot (6), des moyens (16,23,31,45) étant présents afin de permettre aux chariots respectifs d'être déplacés.

6. Appareil qui, selon la Revendication 5, est caractérisé en ce que le premier chariot (4) est disposé de manière à se déplacer sur des rails (3) placés de part et d'autre d'un établi allongé (2).

7. Appareil qui, selon les Revendications 5 ou 6, est caractérisé en ce que les moyens (26,27,28) reliant le deuxième chariot (5) au premier chariot (4) sont présents afin d'éliminer toute vibration.

8. Appareil qui, selon la Revendication 7, est caractérisé en ce que le premier chariot comprend deux éléments latéraux supérieurs séparés (11) reliés par deux éléments de liaison (12) ; un deuxième chariot (5) est disposé de manière à être entraîné le long de la surface supérieure des éléments de liaison (12), les moyens permettant de déplacer le deuxième chariot comprenant au moins une roue entraînée (26) qui s'engage avec la partie inférieure de chacun des éléments de liaison (12), des moyens (27,28) agissant pour forcer la roue à s'engager avec l'élément de liaison, la roue (26) étant munie d'un pneu conçu en matière résistante afin de supprimer les vibrations.

9. Appareil qui, selon une des Revendications de 5 à 8, est caractérisé en ce que la meule (41) est disposée sur un bras de levier (42) qui se meut de bas en haut.

10. Appareil qui, selon la Revendication 9, est caractérisé en ce qu'un moteur (45) est monté sur le troisième chariot (6) et sert à élever et à abaisser le bras de levier (42) ainsi que la meule (41), et que des moyens d'embrayage réglables (47) se trouvant entre le moteur (45) et le bras (42) permettent de régler la pression appliquée par la meule (41) à la surface du lingot (1) grâce aux moyens d'embrayage.

11. Appareil qui, selon toute Revendication de 5 à 10, est caractérisé en ce que des moyens (129) sont disposés de manière à faire pivoter la meule autour d'un axe vertical.

12. Méthode de traiter les défauts de surface sur les différentes surfaces d'un lingot de métal allongé, d'une coupe rectangulaire, cette méthode consistant à placer le lingot (1) sur l'établi (2), de manière à ce que l'établi (2) présente une face dont les défauts de surface seront traités, et à abaisser l'appareil (41) servant à traiter la surface vers cette face, caractérisée en ce que l'établi (2) inclut une série de renfoncements (60), séparés transversalement, et s'étendant longitudinalement en forme de v , conçus de manière à recevoir une arête longitudinale du lingot en déplaçant petit à petit le lingot sur toute la largeur de l'établi pour que chacune des arêtes des lingots retombe dans tous les renfoncements successifs, ce qui permet à chacune des faces successives de faire face à l'appareil pour que les défauts de surface soient traités et éliminés de toutes les faces du lingot.
